(19) Europäisches Patentamt

European Patent Office

Office européen des brevets

(11) **EP 1 556 754 B1**

(12) **EUROPÄISCHE PATENTSCHRIFT**

(45) Veröffentlichungstag und Bekanntmachung des Hinweises auf die Patenterteilung:
**12.04.2006 Patentblatt 2006/15**

(21) Anmeldenummer: **03809741.6**

(22) Anmeldetag: **29.10.2003**

(51) Int Cl.:
***G06F 7/58*** (2006.01)

(86) Internationale Anmeldenummer:
**PCT/EP2003/012006**

(87) Internationale Veröffentlichungsnummer:
**WO 2004/040434 (13.05.2004 Gazette 2004/20)**

(54) **VORRICHTUNG UND VERFAHREN ZUM ERZEUGEN EINER PSEUDOZUFÄLLIGEN FOLGE VON ZAHLEN**

DEVICE AND METHOD FOR GENERATING A PSEUDO-RANDOM SEQUENCE OF NUMBERS

DISPOSITIF ET PROCEDE POUR PRODUIRE UNE SEQUENCE DE NOMBRES PSEUDO-ALEATOIRES

(84) Benannte Vertragsstaaten:
**DE FR**

(30) Priorität: **31.10.2002 DE 10250831**

(43) Veröffentlichungstag der Anmeldung:
**27.07.2005 Patentblatt 2005/30**

(73) Patentinhaber: **Infineon Technologies AG
81669 München (DE)**

(72) Erfinder:
- **DIRSCHERL, Gerd
  81543 München (DE)**
- **GÖTTFERT, Rainer
  81827 München (DE)**
- **MEYER, Bernd
  81737 München (DE)**
- **SEIFERT,Jean-Pierre
  Mail Stop JF2-55, Intel Corp.
  OR 97124 Hillsborough (US)**

(74) Vertreter: **Schoppe, Fritz
Patentanwälte
Schoppe, Zimmermann, Stöckeler & Zinkler
Postfach 246
82043 Pullach bei München (DE)**

(56) Entgegenhaltungen:
**EP-A- 0 340 694        DE-A- 2 734 302**

- **HELLEBRAND S ET AL: "MIXED-MODE BIST USING EMBEDDED PROCESSORS" PROCEEDINGS OF THE INTERNATIONAL TEST CONFERENCE. WASHINGTON, OCT. 20, 20. Oktober 1996 (1996-10-20), Seiten 195-204, XP000799910 ISBN: 0-7803-3541-4**
- **MITA R ET AL: "A novel pseudo random bit generator for cryptography applications" 9TH INTERNATIONAL CONFERENCE ON ELECTRONICS, CIRCUITS AND SYSTEMS 2002, Bd. 2, 15. September 2002 (2002-09-15), Seiten 489-492, XP010614393**

**Beschreibung**

Die vorliegende Erfindung bezieht sich auf Zahlengeneratoren und insbesondere auf Zahlengeneratoren zum Erzeugen einer pseudozufälligen Folge von Zahlen.

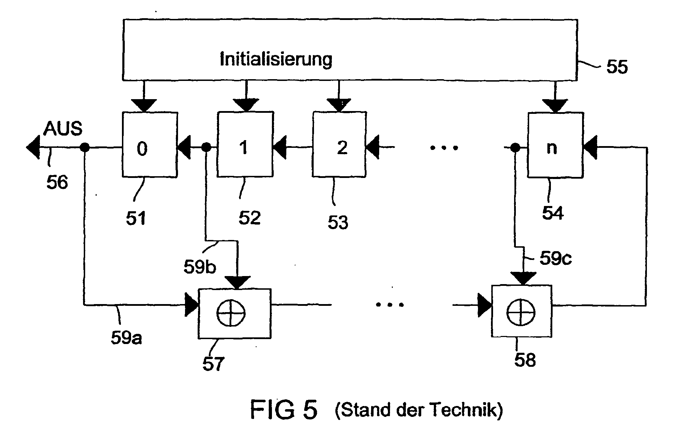

Ein bekannter derartiger Zufallszahlengenerator ist in Fig. 5 dargestellt. Der Pseudozufallszahlengenerator von Fig. 5, der auch als lineares rückgekoppeltes Schieberegister bezeichnet wird, umfaßt eine Mehrzahl von Speicherelementen 51, 52, 53, 54, die in Fig. 5 von 0 bis n durchnummeriert sind. Die Speicherzellen sind über eine Initialisierungseinrichtung 55 auf einen Startwert initialisierbar. Die Speicherzellen 51-54 bilden insgesamt eine Vorwärtskopplungseinrichtung, während das lineare Schieberegister, das durch die Speicherzellen 51-54 gebildet ist, durch eine Rückkopplungseinrichtung rückgekoppelt ist, die zwischen einen Ausgang 56 der Schaltung und der Speicherzelle n gekoppelt ist. Die Rückkopplungseinrichtung umfaßt im einzelnen eine oder mehrere Kombinationseinrichtungen 57, 58, die von jeweiligen Rückkopplungszweigen 59a, 59b, 59c so gespeist werden, wie es in Fig. 5 beispielhaft dargestellt ist. Der Ausgangswert der letzten Kombinationseinrichtung 58 wird in die Speicherzelle n, die in Fig. 5 mit 54 bezeichnet ist, eingespeist.

Das in Fig. 5 gezeigte lineare rückgekoppelte Schieberegister wird von einem Takt betrieben, so daß in jedem Taktzyklus die Belegung der Speicherzellen um eine Stufe Bezug nehmend auf Fig. 5 nach links geschoben wird, so daß in jedem Taktzyklus der in der Speichereinrichtung 51 gespeicherte Zustand als Zahl ausgegeben wird, während gleichzeitig der Wert am Ausgang der letzten Kombinationseinrichtung 58 in die erste Speichereinheit n der Folge von Speichereinheiten eingespeist wird. Das in Fig. 5 dargestellte lineare rückgekoppelte Schieberegister liefert somit eine Folge von Zahlen ansprechend auf eine Folge von Taktzyklen. Die am Ausgang 56 erhaltene Folge von Zahlen hängt von dem Startzustand ab, der durch die Initialisierungseinrichtung 55 vor Inbetriebnahme des Schieberegisters hergestellt wird. Der durch die Initialisierungseinrichtung 55 eingegebene Startwert wird auch als Keim oder Seed bezeichnet, weshalb solche in Fig. 5 dargestellte Anordnungen auch als Seed-Generatoren bezeichnet werden.

Die an dem Ausgang 56 erhaltene Folge von Zahlen wird als pseudozufällige Folge von Zahlen bezeichnet, da die Zahlen scheinbar zufällig aufeinander folgen, aber insgesamt periodisch sind, obgleich die Periodendauer groß ist. Darüber hinaus ist die Folge von Zahlen eindeutig wiederholbar und damit pseudozufällig, wenn der Initialisierungswert, der durch die Initialisierungseinrichtung 55 den Speicherelementen zugeführt wird, bekannt ist. Solche Schieberegister werden beispielsweise als Key-Stream-Generatoren eingesetzt, um einen von einem speziellen Initialisierungswert (Seed) abhängigen Strom von Ver-/Ent-Schlüsselungsschlüsseln zu liefern.

Solche in Fig. 5 dargestellten Schieberegister haben den Nachteil einer geringen linearen Komplexität. So genügen bei einem n-Bit-LFSR (LFSR = Linear Feedback Shift Register) 2 n Bits der Ausgabefolge, um die gesamte Folge zu berechnen. Der Vorteil solcher in Fig. 5 dargestellten bekannten LFSRs besteht jedoch darin, daß der Hardwareaufwand sehr gering ist.

Aus EP 0 340 694 ist ein Schieberegister mit veränderbarer Rückkopplungseigenschaft bekannt, der einen Zustand, wobei alle Speicherzellen eine Null aufweisen, künstlich in die periodische Folge einfügt um so als erschöpfender Prüfmustergenerator eingesetzt werden zu können.>

Darüber hinaus existieren unregelmäßig getaktete LFSRs. Diese zeigen einen etwas erhöhten Hardwareaufwand bei einer meist geringeren Periode. Die lineare Komplexität kann jedoch deutlich höher sein. Ein Nachteil solcher unregelmäßig getakteter Vorrichtungen ist jedoch die Tatsache, daß aufgrund der unregelmäßigen Taktung durch Strommessung im Rahmen einer SPA (SPA = Simple Power Analysis) prinzipiell auf die Ausgabefolge geschlossen werden könnte. Indem die Schieberegistervor-richtungen als Teile von Schlüsselgeneratoren verwendet werden, die inhärent geheim zu haltende Daten, also Schlüsseldaten, erzeugen, ist es bei ihnen besonders wichtig, daß sie gegen jegliche Art von kryptographischen Angriffen sicher sind.

Andererseits besteht jedoch bei solchen Vorrichtungen insbesondere dann, wenn sie auf Chipkarten untergebracht werden sollen, die Anforderung, daß der Hardwareaufwand gering sein muß. In anderen Worten ausgedrückt muß die Chipfläche, die solche Vorrichtungen in Anspruch nehmen, so klein als möglich sein. Dies liegt daran, daß in der Halbleiterherstellung die Chipfläche einer gesamten Vorrichtung letztendlich den Preis und damit die Gewinnmarge des Chipherstellers bestimmt. Ferner ist besonders bei Chipkarten üblicherweise eine Spezifikation so, daß ein Kunde sagt, daß ein Prozessorchip eine maximale Fläche in Quadratmillimetern haben darf, auf der verschiedenartigste Funktionalitäten untergebracht werden müssen. Daher liegt es an dem Schaltungshersteller, diese kostbare Fläche auf die einzelnen Komponenten zu verteilen. Im Hinblick auf die immer komplexer werdenden kryptographischen Algorithmen ist eine Anstrengung des Chipherstellers dahingehend gerichtet, daß der Chip möglichst viel Speicher hat, um auch Arbeitsspeicher-intensive Algorithmen in vertretbarer Zeit berechnen zu können. Die Chipfläche für Schlüsselgeneratoren und andere derartige Komponenten muß daher so klein als möglich gehalten werden, um auf der gegebenen Chipfläche mehr Speicher unterbringen zu können.

Die generelle Anforderung an Schlüsselgeneratoren bzw. Vorrichtungen zum Erzeugen einer pseudozufälligen Folge von Zahlen besteht somit darin, einerseits sicher zu sein und andererseits möglichst wenig Platz zu benötigen, also einen möglichst geringen Hardware-Aufwand zu haben.

Prinzipiell haben lineare Schieberegister verschiedene Anwendungen in der Codiertheorie, der Kryptographie und weiteren elektrotechnischen Gebieten. Die Ausgangssequenzen linearer Schieberegister haben nützliche strukturelle Eigenschaften, die in algebraische Eigenschaften und Distributionseigenschaften aufgeteilt werden können.

Es ist bekannt, daß eine Ausgabesequenz eines n-stufigen linearen Schieberegisters, wie es ausgeführt worden ist, periodisch ist. Die Länge der Periode kann ziemlich groß sein und ist oft bezüglich n, also der Anzahl von Speicherelementen, exponentiell. Die Länge der Periode beträgt insbesondere $2^n-1$, wenn dem Schieberegister ein primitives Rückkopplungspolynom zugrunde liegt

Die lineare Komplexität einer solchen Sequenz ist jedoch höchstens gleich n. Die lineare Komplexität einer periodischen Folge ist definitionsgemäß gleich der Anzahl der Zellen des kleinstmöglichen Schieberegisters, das die betrachtete Folge erzeugen kann.

Aufgrund dieser Tatsache kann gezeigt werden, daß, wie es ausgeführt worden ist, 2 n aufeinanderfolgende Ausdrücke der Sequenz ausreichen, um alle restlichen Ausdrücke der Sequenz vorherzusagen. Darüber hinaus gibt es einen effizienten Algorithmus, den sogenannte Berlekamp-Massey-Algorithmus, um die Parameter zu berechnen, die nötig sind, um die gesamte Sequenz zu erhalten. Daher eignen sich Sequenzen von linearen Schieberegistern trotz ihrer potentiell großen Perioden und ihrer statistisch guten Verteilungseigenschaften nicht direkt als Schlüsselfolgen in sogenannten Stromchiffren. Darüber hinaus existieren andere Anwendungen, bei denen die vergleichsweise niedrige lineare Komplexität einer Sequenz, die durch ein lineares Schieberegister erzeugt wird, als Nachteil zu sehen ist.

Üblicherweise werden lineare Schieberegister durch ihr charakteristisches Polynom beschrieben. Der Grad des charakteristischen Polynoms ist gleich der Anzahl von Verzögerungselementen, die typischerweise als Flip-Flops ausgeführt werden, des betrachteten Schieberegisters. Die Exponenten der Terme von f(x) mit Ausnahme des führenden Terms entsprechen den Verzögerungselementen des Schieberegisters, die zu der Rückkopplung beitragen. Das in Fig. 5 dargestellte lineare Schieberegister hätte daher ein charakteristisches Polynom der Art:

$$f(x) = x^{n+1} + x^n + \ldots + x + 1.$$

Werden solche linearen Schieberegister, wie sie in Fig. 5 beispielhaft dargestellt sind, mit einem Initialisierungszustand von der Initialisierungseinrichtung 55 geladen, wobei dieser Zustand auch als Anfangs-Zustandsvektor bezeichnet wird, so geben sie typischerweise eine periodische Sequenz aus, die abhängig von der Implementierung eine bestimmte Vorperiode oder Preperiode und eine nachfolgende Periode haben. Lineare Schieberegister sind immer periodisch. In technischen Anwendungen wird häufig angestrebt, daß die Ausgabefolge sowohl eine große Periodenlänge als auch eine hohe lineare Komplexität hat.

Die Aufgabe der vorliegenden Erfindung besteht darin, ein einerseits sicheres und andererseits aufwandsarm implementierbares Konzept zum Erzeugen einer pseudozufälligen Folge von Zahlen zu schaffen.

Diese Aufgabe wird durch eine Vorrichtung gemäß Anspruch 1, ein Verfahren gemäß Anspruch 13 oder ein Computer-Programm gemäß Anspruch 14 gelöst.

Der vorliegenden Erfindung liegt die Erkenntnis zugrunde, daß ein aufwandsarm implementierbares und dennoch sicheres Konzept zum Erzeugen einer pseudozufälligen Folge von Zahlen dadurch erreicht werden kann, wenn zwei oder mehrere rückgekoppelte Schieberegister gewissermaßen "übereinander" gelegt werden. In anderen Worten ausgedrückt umfaßt eine erfindungsgemäße Vorrichtung zum Erzeugen einer pseudozufälligen Folge von Zahlen eine Vorwärtskopplungseinrichtung mit einer Mehrzahl von Speichereinrichtungen sowie eine Rückkopplungseinrichtung, die zwischen einen Eingang der Vorwärtskopplungseinrichtung und einen Ausgang der Vorwärtskopplungseinrichtung geschaltet ist, wobei die Rückkopplungseinrichtung veränderbar ist und ferner ausgebildet ist, um abhängig von einem Zustand einer Speichereinrichtung der Mehrzahl von Speichereinrichtungen der Vorwärtskopplungseinrichtung ihre Rückkopplungseigenschaft zu verändern. Je nach Zustand in einer Speichereinrichtung der Mehrzahl von Speichereinrichtungen wird somit, wenn lediglich zwei verfügbare Rückkopplungseigenschaften vorhanden sind, eine der beiden Rückkopplungseigenschaften ausgewählt. Hat diese Speichereinrichtung dann einen anderen Zustand in einem späteren Zyklus, so verwendet die erfindungsgemäße Vorrichtung die andere der zumindest zwei unterschiedlichen Rückkopplungseigenschaften. Man kann daher sagen, daß die erfindungsgemäße Vorrichtung zum Erzeugen einer pseudozufälligen Folge von Zahlen ihre Rückkopplungseigenschaft, d. h. ihr Rückkopplungspolynom am Beispiel eines linearen rückgekoppelten erfindungsgemäßen Schieberegisters, selbst auswählt, während die Rückkopplungseigenschaft bei bekannten rückgekoppelten Schieberegistern fest vorgegeben ist.

Erfindungsgemäß werden daher bei einem bevorzugten Ausführungsbeispiel der vorliegenden Erfindung zwei oder mehrere lineare Schieberegister mit unterschiedlichen nicht notwendigerweise primitiven Rückkopplungspolynomen zu einem einzigen Schieberegister überlagert, wobei in Abhängigkeit vom Wert einer oder mehrerer Registerzellen zwischen den verschiedenen linearen Rückkopplungen umgeschaltet wird.

Der Hardwareaufwand ist mit einem normalen linearen rückgekoppelten Schieberegister vergleichbar. Darüber hinaus kann ebenfalls die maximale Periodendauer erreicht werden. Die lineare Komplexität ist jedoch je nach Ausführungsform größer als bei einem linearen rückgekoppelten Schieberegister. So haben lineare rückgekoppelte Schieberegister typischerweise eine lineare Komplexität von n, wobei n die Anzahl von Speicherelementen ist. Das erfindungsgemäße Konzept erlaubt es, Folgen mit linearen Komplexitäten zu erzeugen, die in n exponentiell sind.

Das lineare Komplexitätsprofil weist typischerweise zahlreiche Sprünge auf und gleicht damit dem einer echten Zufallsfolge.

Im Hinblick auf die bekannten unregelmäßig getakteten linearen rückgekoppelten Schieberegister ist das erfindungsgemäße Schieberegister dann unempfindlicher gegenüber einer einfachen Leistungsattacke oder einer Zeitattacke, wenn immer gleichmäßig getaktet wird, da die Umschaltung zwischen verschiedenen Rückkopplungspolynomen durch das erfindungsgemäße rückgekoppelte Schieberegister selbst unabhängig von einer Taktung vorgenommen wird.

Das erfindungsgemäße Konzept ist jedoch nicht nur auf Schieberegister mit linearer Rückkopplung anwendbar. Die Mehrzahl von Speichereinrichtungen müssen nicht notwendigerweise seriell in Kette geschaltet sein, sondern können in einer Mischung aus serieller und paralleler Architektur angeordnet sein. Darüber hinaus sind verschiedene Rückkopplungseigenschaften denkbar, die nicht unbedingt die logischen Grundfunktionen umfassen müssen, sondern auch kompliziertere arithmetische Funktionen oder Kombinationen von logischen Funktionen sein können.

Erfindungsgemäß wesentlich ist lediglich, daß abhängig von dem Zustand von einer oder mehrerer Speichereinrichtungen die Rückkopplungseigenschaft der Rückkopplungseinrichtung variiert wird.

Bei einem bevorzugten Ausführungsbeispiel der vorliegenden Erfindung unterscheiden sich die verschiedenen Rückkopplungseigenschaften, zwischen denen hin- und hergeschaltet werden kann, darin, daß je nach Rückkopplungseigenschaft die Werte von unterschiedlichen Speichereinrichtungen der Mehrzahl von Speichereinrichtungen der Rückkopplung zugeführt werden.

Alternativ kann die erfindungsgemäße Vorrichtung jedoch auch derart implementiert werden, daß immer dieselben Speichereinrichtungen zur Rückkopplung beitragen, daß jedoch die arithmetische und/oder logische Kombinationsvorschrift in der Rückkopplungseinrichtung von Rückkopplungseigenschaft zu Rückkopplungseigenschaft variiert.

Darüber hinaus sind Kombinationen dieser beiden Optionen bei verschiedenen Anwendungen sinnvoll.

Die erfindungsgemäße Vorrichtung zum Erzeugen einer pseudozufälligen Folge von Zahlen ist in ihrer einfachsten Form besonders vorteilhaft, da sie dann ohne zusätzliche Hardware-Kosten im Vergleich zu den Kosten, die für ein lineares Schieberegister mit derselben Anzahl von Flip-Flops anfallen, implementiert werden kann. Das erfindungsgemäße Konzept ermöglicht es somit bei gleichen Hardware-Kosten pseudozufällige Folgen von Zahlen zu erzeugen, die eine ungleich höhere lineare Komplexität haben als sie durch in ihrer Größe vergleichbare lineare Schieberegister erzeugt werden kann.

Das erfindungsgemäße Konzept vereint somit die Anforderungen an eine Vorrichtung zum Erzeugen einer pseudozufälligen Folge von Zahlen insbesondere im Kryptographiebereich nach hoher und möglichst maximaler Periode, nach hoher linearer Komplexität, nach einem guten linearen Komplexitätsprofil, nach einem geringen Hardwareaufwand (Fläche) und einer geringen Anfälligkeit gegenüber Stromangriffen (wie z. B. einer einfachen Leistungsanalyse oder einer differentiellen Leistungsanalyse) und Timing-Attacken.

Bevorzugte Ausführungsbeispiele der vorliegenden Erfindung werden nachfolgend Bezug nehmend auf die beiliegenden Zeichnungen detailliert erläutert. Es zeigen:

Fig. 1 ein Prinzipblockschaltbild einer erfindungsgemäßen Vorrichtung zum Erzeugen einer pseudozufälligen Folge von Zahlen;

Fig. 2 ein bevorzugtes Ausführungsbeispiel der vorliegenden Erfindung am Beispiel eines achtstufigen linearen Schieberegisters mit variabler Rückkopplungseigenschaft;

Fig. 3 ein Flußdiagramm eines erfindungsgemäßen Verfahrens zum Erzeugen einer pseudozufälligen Folge von Zahlen;

Fig. 4 einen Ausschnitt eines Blockschaltbilds einer erfindungsgemäßen Vorrichtung zur Demonstration einer alternativen Implementation der Rückkopplungseinrichtung von Fig. 2; und

Fig. 5 ein Prinzip-Blockschaltbild eines erfindungsgemäßen linearen rückgekoppelten Schieberegisters.

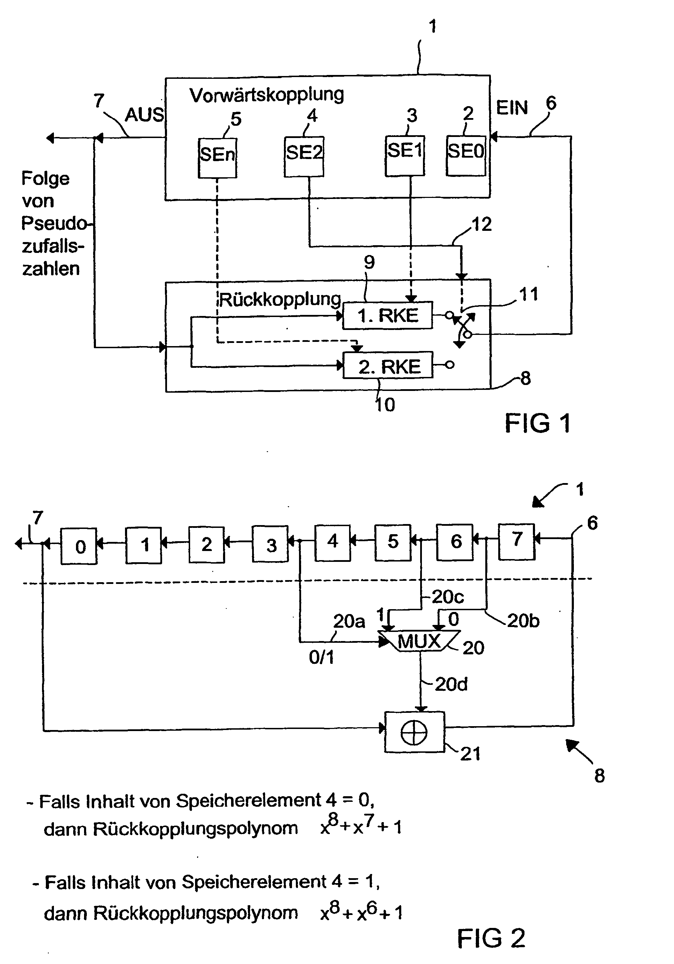

Fig. 1 zeigt eine erfindungsgemäße Vorrichtung zum Erzeugen einer pseudozufälligen Folge von Zahlen mit einer Vorwärtskopplungseinrichtung 1, die eine Folge von Speichereinheiten 2 bis 5 aufweist, und die ferner einen Eingang 6 sowie einen Ausgang 7 umfaßt, der dem Ausgang der Vorrichtung zum Ausgeben der Folge von Pseudozufallszahlen entspricht. Es sei darauf hingewiesen, daß die Folge von Pseudozufallszahlen durch weitere Einrichtungen, die in Fig. 1 nicht gezeigt sind, ergänzt werden kann, um Folgen von Zufallszahlen zu puffern, auf irgendeine andere Art und Weise zu kombinieren etc.

Die in Fig. 1 gezeigte erfindungsgemäße Vorrichtung umfaßt ferner eine Rückkopplungseinrichtung 8, die eine veränderbare Rückkopplungseigenschaft aufweist und zwischen den Eingang 6 und den Ausgang 7 der Vorwärtskopplungseinrichtung 1 geschaltet ist. Die veränderbare Rückkopplüngseigenschaft der Rückkopplungseinrichtung 8 ist in Fig. 1 dahingehend dargestellt, daß die Rückkopplungseinrichtung 8 eine erste Rückkopplungseigenschaft 9 oder eine zweite Rückkopplungseigenschaft 10 annehmen kann, wobei zwischen der ersten Rückkopplungseigenschaft 9 und der zweiten Rückkopplungseigenschaft 10 durch eine Umschalteinrichtung 11 z. B. hin- und hergeschaltet werden kann. Das Steuersignal für die Umschalteinrichtung 11 wird lediglich beispielhaft von der vierten Speichereinrichtung SE2 geliefert, wie es durch einen Signalpfad 12 symbolisch dargestellt ist. Die erste Rückkopplungseigenschaft 9 und die zweite Rückkopplungseigenschaft 10 unterscheiden sich bei einem in Fig. 1 gezeigten Ausführungsbeispiel dadurch, daß im Falle der ersten Rückkopplungseigenschaft der Zustand der Speichereinrichtung 1 (Nr. 3) in die Rückkopplung eingeht, während im Falle der zweiten Rückkopplungseigenschaft der Zustand der Speichereinrichtung 5 (SEn) zur Rückkopplung beiträgt.

Alternativ oder zusätzlich kann die Rückkopplungseinrichtung 8 derart ausgebildet sein, daß in der Rückkopplungseigenschaft, die den Wert am Ausgang 7 der Vorwärtskopplungseinrichtung mit einem inneren Zustand der Vorwärtskopplungseinrichtung kombiniert, je nach ausgewählter Rückkopplungseigenschaft eine andere Kombinationsvorschrift eingesetzt wird. So könnte beispielsweise in der ersten Rückkopplungseigenschaft zur Kombination des Werts am Ausgang 7 mit dem Wert der Registerzelle 3 eine UND-Kombination eingesetzt werden, während die zweite Rückkopplungseigenschaft sich von der ersten Rückkopplungseigenschaft dadurch unterscheidet, daß zur Kombination der beiden genannten Werte nicht eine UND- sondern eine OR-Kombination eingesetzt wird. Für Fachleute ist es klar, daß beliebige Arten von unterschiedlichen Kombinationsvorschriften eingesetzt werden können.

Darüber hinaus müssen Werte der Speichereinrichtungen SE1 bzw. SEn nicht unmittelbar einer Kombinationseinrichtung in der Rückkopplungseinrichtung zugeführt werden, sondern diese Werte können z. B. invertiert werden, miteinander kombiniert werden oder auf irgend eine andere Art und Weise verarbeitet werden, bevor dann sie verarbeiteten Werte einer Kombinationseinrichtung zugeführt werden.

Darüber hinaus ist es nicht wesentlich, daß die Umschalteinrichtung 11 direkt von dem Zustand der Speichereinheit SE2 gesteuert wird. Statt dessen könnte der Zustand der Speichereinrichtung SE2 invertiert werden, auf irgend eine andere Art und Weise logisch oder arithmetisch verarbeitet werden oder sogar mit dem Zustand einer oder mehrerer weiterer Speichereinrichtungen kombiniert werden, so lange eine Vorrichtung zum Erzeugen einer pseudozufälligen Folge von Zahlen erhalten wird, die eine Rückkopplungseinrichtung aufweist, deren Rückkopplungseigenschaft nicht statisch ist, sondern dynamisch abhängig von der Vorwärtskopplungseinrichtung und insbesondere von einem oder mehreren Zuständen in Speichereinheiten der Vorwärtskopplungseinrichtung variierbar ist.

Fig. 2 zeigt als bevorzugtes Ausführungsbeispiel der vorliegenden Erfindung ein 8-Bit-Schieberegister, bei dem abhängig von dem Zustand der Speichereinrichtung mit der Nr. 4 ein Multiplexer 20 über einen Steuereingang 20a angesteuert wird. Ist der Steuereingang 20a auf einem Null-Zustand, d. h. liegt in der Speicherzelle mit der Nr. 4 ein Null-Zustand vor, so wird der Multiplexer derart gesteuert, daß er den Zustand der Speichereinrichtung mit der Nr. 7 an einer ersten Eingangsleitung 20b desselben mit einer Ausgangsleitung 20d verbindet. Dies würde der Wirkung eines linearen Schieberegisters mit dem folgende Rückkopplungspolynom entsprechen:

$$x^8 + x^7 + 1$$

Ist der Steuereingang 20a dagegen auf einem Eins-Zustand, so wird der Zustand der Speichereinrichtung mit der Nr. 6 an einem zweiten Eingang 20c mit der Ausgangsleitung 20d des Multiplexers 20 verbunden. Die Ausgangsleitung 20d ist mit einer Kombinationseinrichtung 21 verbunden, der ferner bei dem in Fig. 2 gezeigten Ausführungsbeispiel der Wert am Ausgang 7 der Vorwärtskopplungseinrichtung, der gleichzeitig den Ausgang der Vorrichtung zum Erzeugen einer pseudozufälligen Folge von Zahlen bildet, zugeführt. Das Ergebnis, das durch die Kombinationseinrichtung 21 berechnet wird, wird wiederum der ersten Speichereinrichtung mit der Nr. 7 in Fig. 2 zugeführt.

Ist daher der Inhalt der Speicherzelle mit der Nr. 4 gleich 1, so liegt folgendes Rückkopplungspolynom vor:

$$x^8 + x^6 + 1$$

Aus dem vorstehenden wird ersichtlich, daß zwischen den beiden genannten Rückkopplungspolynomen umgeschaltet wird, und zwar abhängig von dem Inhalt der Speicherzelle mit der Nr. 4 der Vorwärtskopplungseinrichtung 1.

Es hat sich herausgestellt, daß die linearen Komplexitäten von durch die erfindungsgemäß erhaltenen Sequenzen hoch sind, nämlich zwischen 234 und 254. Es sei darauf hingewiesen, daß die Periodenlänge einer Sequenz, die durch ein beliebiges achtstufiges Schieberegister erzeugt wird, maximal 255 betragen kann. Der erwartete Wert für die lineare Komplexität eines Zufalls-Bit-Strings der Länge 255 beträgt $255/2 = 127,5$.

Das einfachste von allen achtstufigen Schieberegistern, die eine Sequenz erzeugen können, ist das in Fig. 2 dargestellte Schieberegister mit den beiden in Fig. 2 dargestellten Rückkopplungspolynomen. Im Hinblick auf die Theorie der linearen Schieberegister als Vergleichsbeispiel sei darauf hingewiesen, daß es 16 primitive Polynome des Grads 8 gibt. Jedes derartige Polynom beschreibt ein lineares Schieberegister das eine Sequenz der Periodenlänge 255 und der linearen Komplexität 8 erzeugen kann. Demgegenüber existieren viel mehr Schieberegister - nämlich 2020 - gemäß der vorliegenden Erfindung, die Sequenzen der Periodenlänge 255 gemäß der vorliegenden Erfindung erzeugen können.

Darüber hinaus haben die Sequenzen, die durch die erfindungsgemäßen Schieberegister erzeugt werden, viel größere lineare Komplexitäten als ihre analogen Ausführungen gemäß dem Stand der Technik. Wie es ausgeführt worden ist, wird unter allen untersuchten Möglichkeiten für ein 8-Bit-Schieberegister mit Rückkopplungseinrichtung die in Fig. 2 gezeigte Ausführungsform bevorzugt, da sie den einfachsten Hardware-Aufwand mit sich bringt, gleichzeitig eine maximale Periodendauer hat und ferner eine maximale lineare Komplexität aufweist.

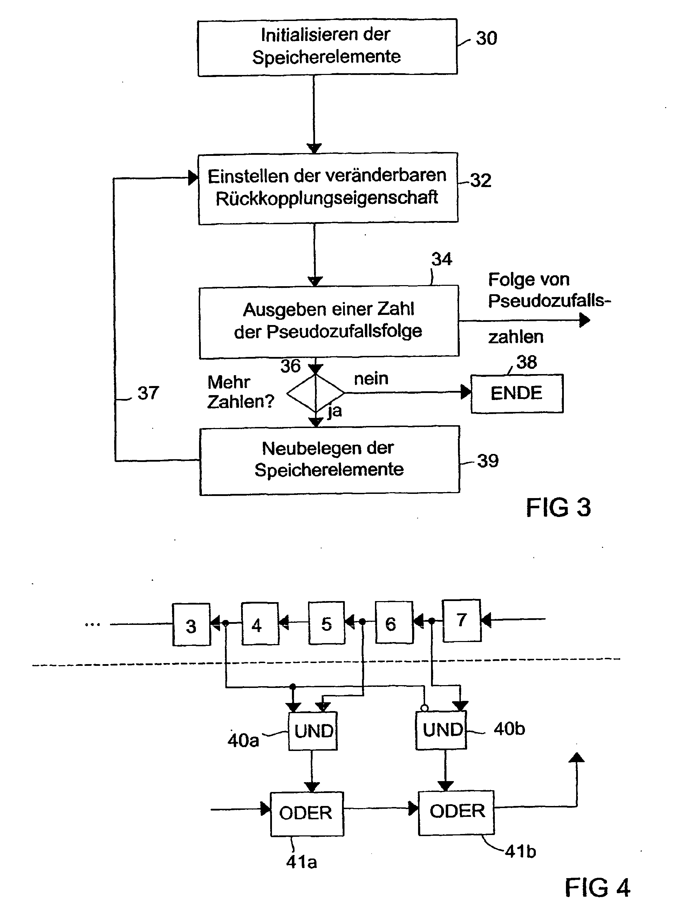

Nachfolgend wird auf Fig. 4 Bezug genommen, um eine spezielle Implementation der Multiplexereinrichtung 20 von Fig. 2 darzustellen. Der Multiplexer 20 kann ohne weiteres durch zwei UND-Gatter 40a, 40b implementiert werden, die beide mit seriell geschalteten ODER-Gattern (oder XOR-Gattern) 41a, 41b so verbunden sind, wie es in Fig. 4 gezeigt ist. Im einzelnen wird der Zustand der Speicherzelle 4 dem ersten UND-Gatter 40a zugeführt, während der invertierte Zustand der Speicherzelle 4 dem zweiten UND-Gatter 40b zugeführt wird. Zur Bestimmung des entsprechenden Rückkopplungspolynoms wird der Inhalt der Speicherzelle 6 dem ersten UND-Gatter 40a als zweiter Eingang zugeführt, während der Inhalt der Speicherzelle 7 dem zweiten UND-Gatter 40b als zweiter Eingang zugeführt wird. Ferner sei darauf hingewiesen, daß die beiden hintereinander geschalteten ODER-Gatter 41a, 41b alternativ implementiert werden können. Wenn jedoch Implementationen benötigt werden, bei denen jedes logische Gatter zwei Eingänge und einen Ausgang hat, ist die in Fig. 4 gezeigte beispielhafte Darstellung vorteilhaft.

Fig. 3 zeigt ein Flußdiagramm eines erfindungsgemäßen Verfahrens zum Erzeugen einer pseudozufälligen Folge von Zahlen unter Verwendung einer Vorwärtskopplungseinrichtung 1 mit einer Mehrzahl von Speichereinrichtungen, die einen Eingang und einen Ausgang zum Ausgeben der Folge von Zahlen aufweist, und einer Rückkopplungseinrichtung, die eine veränderbare Rückkopplungseigenschaft aufweist und zwischen den Eingang und den Ausgang geschaltet ist. Das Verfahren umfaßt zunächst einen Schritt des Initialisierens 30 der Speichereinrichtung in der Vorwärtskopplungseinrichtung auf einen vorbestimmten Startwert.

Ansprechend auf einen Zustand einer Speichereinrichtung der Mehrzahl von Speichereinrichturigen der Vorwärtskopplungseinrichtung wird in einem Schritt 32 eine veränderbare Rückkopplungseigenschaft der Rückkopplungseinrichtung eingestellt. Hierauf wird ein Zustand einer Speichereinrichtung, die mit dem Ausgang der Vorwärtskopplungseinrichtung 1 verbunden ist, ausgegeben (Schritt 34), um eine Zahl der Folge von Zufallszahlen zu erhalten. Hierauf wird in einem Entscheidungsblock 36 untersucht, ob weitere Zufallszahlen benötigt werden. Wird diese Frage mit nein beantwortet, so wird das Verfahren in einem Schritt 38 beendet. Wird dagegen festgestellt, daß weitere Zahlen benötigt werden, so wird der Entscheidungsblock 36 mit "ja" beantwortet, woraufhin ein Schritt 39 folgt, in dem die Mehrzahl von Speichereinrichtungen basierend auf einem vorherigen Zustand der Speichereinrichtung und auf einer Ausgabe der Rückkopplungseinrichtung neu belegt werden. Wie es durch eine Schleife 37 angedeutet ist, werden die Schritte des Einstellens 32, Ausgebens 34 und Neubelegens 39 so oft wie gewünscht wiederholt, um schließlich die pseudozufällige Folge von Zahlen zu erhalten.

Es sei darauf hingewiesen, daß das erfindungsgemäße Verfahren unter Verwendung eines regelmäßigen Takts durchgeführt werden kann, oder auch unter Verwendung eines unregelmäßigen Takts, obgleich die Variante mit regelmäßigem Takt im Hinblick auf eine bessere Sicherheit gegenüber Leistungs- oder Zeit-Attacken bevorzugt wird.

Im Falle des in Fig. 2 dargestellten linearen Schieberegisters wird darauf hingewiesen, daß das Neubelegen der Mehrzahl von Speichereinrichtungen seriell erfolgt, und zwar basierend auf dem vorherigen Zustand der Speichereinrichtungen, der - insgesamt gesehen - um einen Schritt nach links verschoben wird, so daß ausgangsseitig ein Zustand der Speichereinrichtung 0 "herausfällt". Dieser "herausgefallene" Wert ist die Zahl, die im Schritt 34 ausgegeben wird. Durch das LinksVerschieben des insgesamt betrachteten Zustands der gesamten Speichereinrichtungen kann die ganz rechte Speichereinrichtung mit der Nr. 7 in Fig. 2 neu belegt werden. Die Mehrzahl von Speichereinrichtungen und insbesondere die Speichereinrichtung 7 wird daher abhängig von einer Ausgabe der Rückkopplungseinrichtung zum aktuellen Taktzeitpunkt neu belegt.

Das erfindungsgemäße Verfahren, wie es anhand von Fig. 3 dargestellt worden ist, kann abhängig von den vorliegenden Gegebenheiten in Hardware in Form einer Zustandsmaschine oder in Software unter Verwendung eines programmierbaren Prozessors implementiert werden. Die vorliegende Erfindung betrifft somit ein computerlesbares Medium, auf dem die Schritte des erfindungsgemäßen Verfahrens in Form eines Codes gespeichert sind, der, wenn er auf einem entsprechenden Prozessor abgearbeitet wird, in einer Ausführung des erfindungsgemäßen Verfahrens resultiert. Die vorliegende Erfindung betrifft somit auch ein Computer-Programm, das, wenn es auf einem Computer ausgeführt wird, in einer Ausführung des erfindungsgemäßen Verfahrens resultiert.

Bezugszeichenliste

| | |
|---|---|
| 1 | Vorwärtskopplungseinrichtung |
| 2 | Speichereinrichtung |
| 3 | Speichereinrichtung |
| 4 | Speichereinrichtung |
| 5 | Speichereinrichtung |
| 6 | Eingang der Vorwärtskopplungseinrichtung |
| 7 | Ausgang der Vorwärtskopplungseinrichtung |
| 8 | Rückkopplungseinrichtung |
| 9 | erste Rückkopplungseigenschaft |
| 10 | zweite Rückkopplungseigenschaft |
| 11 | Auswahleinrichtung |
| 12 | Steuerleitung für die Auswahleinrichtung |
| 20 | Auswahleinrichtung |
| 20a | Steuereingang |
| 20b | erster Eingang |
| 20c | zweiter Eingang |
| 20d | Ausgang |
| 21 | Kombinationseinrichtung |
| 30 | Initialisierungsschritt |
| 32 | Einstellungsschritt |
| 34 | Ausgabeschritt |
| 36 | Entscheidungsschritt |
| 37 | Wiederholungsschleife |
| 38 | Ende |
| 39 | Neubelegungsschritt |
| 40a | erstes UND-Gatter |
| 40b | zweites UND-Gatter |
| 41a | erstes ODER-Gatter |
| 41b | zweites ODER-Gatter |
| 51 | Speicherzelle |
| 52 | Speicherzelle |
| 53 | Speicherzelle |
| 54 | Speicherzelle |
| 55 | Initialisierungseinrichtung |
| 56 | Ausgang |
| 57 | erste ODER-Verknüpfung |
| 58 | zweite ODER-Verknüpfung |
| 59a | erste Rückkopplungsleitung |
| 59b | zweite Rückkopplungsleitung |
| 59c | dritte Rückkopplungsleitung |

**Patentansprüche**

1. Vorrichtung zum Erzeugen einer pseudozufälligen Folge von Zahlen, mit folgenden Merkmalen:

   einer Vorwärtskopplungseinrichtung (1) mit einer Mehrzahl von Speichereinrichtungen (2, 3, 4, 5), wobei die Vorwärtskopplungseinrichtung (1) einen Eingang (6) und einen Ausgang (7) zum Ausgeben der Folge von Zufallszahlen aufweist; und

einer Rückkopplungseinrichtung (8), die eine veränderbare Rückkopplungseigenschaft (9, 10) aufweist und zwischen den Eingang (6) und den Ausgang (7) der Vorwärtskopplungseinrichtung (1) geschaltet ist, wobei die Rückkopplungseinrichtung (8) ausgebildet ist, um abhängig von einem Zustand einer Speichereinrichtung (4) der Mehrzahl von Speichereinrichtungen die Rückkopplungseigenschaft zu verändern, **dadurch gekennzeichnet dass** die Rückkopplungseinrichtung (8) folgende Merkmale aufweist:

eine Auswahleinrichtung (20) mit einem ersten Eingang (20b), einem zweiten Eingang (20c), einem Steuereingang (20a) und einem Ausgang (20d), wobei die Auswahleinrichtung (20) ausgebildet ist, um abhängig von einem Zustand einer Speichereinrichtung entweder den ersten Eingang (20b) oder den zweiten Eingang (20c) mit dem Ausgang (20d) zu verbinden,
einer Kombinationseinrichtung (21) zum Kombinieren des Ausgangs (20d) der Auswahleinrichtung (20) mit einem Ausgang (7) der Vorwärtskopplungseinrichtung (1), um einen Wert zu erhalten, der in den Eingang (6) der Vorwärtskopplungseinrichtung einspeisbar ist oder in eine Recheneinrichtung.einspeisbar ist, deren Ausgangswert in den Eingang (6) der Vorwärtskopplungseinrichtung einspeisbar ist.

2. Vorrichtung nach Anspruch 1, bei der die Vorwärtskopplungseinrichtung (1) als Schieberegister ausgebildet ist, wobei die Speichereinrichtungen (2, 3, 4, 5) seriell geschaltet sind.

3. Vorrichtung nach Anspruch 1 oder 2, bei der die Speichereinrichtungen (2, 3, 4, 5) als Flip-Flops ausgebildet sind.

4. Vorrichtung nach einem der vorhergehenden Ansprüche, bei der die veränderbare Rückkopplungseigenschaft ein erstes Rückkopplungspolynom (9) und ein zweites Rückkopplungspolynom (10) aufweist, wobei sich das zweite Rückkopplungspolynom von dem ersten Rückkopplungspolynom unterscheidet.

5. Vorrichtung nach einem der vorhergehenden Ansprüche,
bei der die Vorwärtskopplungseinrichtung (1) wenigstens drei Speichereinrichtungen (3, 4, 5) aufweist, die seriell geschaltet sind, und
bei der die Rückkopplungseinrichtung (8) ausgebildet ist, um bei einem ersten Zustand einer ersten (4) der Speichereinrichtungen als erste Rückkopplungseigenschaft einen Zustand einer zweiten Speichereinrichtung (3) für eine Rückkopplung zu verwenden, und
bei der die Rückkopplungseinrichtung (8) ausgebildet ist, um bei einem zweiten Zustand der ersten Speichereinrichtung (4) als zweite Rückkopplungseigenschaft (10) einen Zustand einer dritten Speichereinrichtung (5) für eine Rückkopplung zu verwenden.

6. Vorrichtung nach einem der vorhergehenden Ansprüche,
bei der die Rückkopplungseinrichtung (8) ausgebildet ist, um als veränderbare Rückkopplungseigenschaft eine Kombination aus einer Zahl an dem Ausgang (7) der Vorwärtskopplungseinrichtung (1) und einem Zustand zumindest einer der Mehrzahl von Speichereinrichtungen (2, 3, 4, 5) zu verwenden.

7. Vorrichtung nach Anspruch 6,
bei der die Rückkopplungseinrichtung (8) ausgebildet ist, um eine Art der Kombination abhängig von einem Zustand einer Speichereinrichtung zu variieren.

8. Vorrichtung nach Anspruch 6 oder 7,
bei der die Rückkopplungseinrichtung (8) ausgebildet ist, um abhängig von einem Zustand einer Speichereinrichtung (4) eine Speichereinrichtung auszuwählen, deren Zustand mit der Zahl an dem Ausgang (7) der Vorwärtskopplungseinrichtung (1) kombiniert wird.

9. Vorrichtung nach einem der vorhergehenden Ansprüche, die ferner folgendes Merkmal aufweist:

eine Takteinrichtung zum Liefern eines regelmäßigen Taktes für die Vorwärtskopplungseinrichtung (1).

10. Vorrichtung nach einem der vorhergehenden Ansprüche, bei der die Mehrzahl von Speichereinrichtungen auf unterschiedliche Ausgangszustände initialisierbar ist.

11. Vorrichtung nach einem der vorhergehenden Ansprüche, bei der die Folge von Zahlen eine Folge von Bits ist, bei der die Vorwärtskopplungseinrichtung (1) eine Folge von binären Speicherelementen umfaßt, und bei der die Rückkopplungseinrichtung (8) in binärer Logik ausgebildet ist.

12. Verfahren zum Erzeugen einer pseudozufälligen Folge von Zahlen unter Verwendung einer Vorwärtskopplungseinrichtung (1) mit einer Mehrzahl von Speichereinrichtungen (2, 3, 4, 5), wobei die Vorwärtskopplungseinrichtung (1) einen Eingang (6) und einen Ausgang (7) aufweist, und unter Verwendung einer Rückkopplungseinrichtung (8), die zwischen den Eingang (6) und den Ausgang (7) der Vorwärtskopplungseinrichtung (1) geschaltet ist, wobei die Rückkopplungseinrichtung (8) eine Auswahleinrichtung (20) mit einem ersten Eingang (20b), einem zweiten Eingang (20c), einem Steuereingang (20a) und einem Ausgang (20d) aufweist, mit folgenden Schritten:

Initialisieren (30) der Speichereinrichtungen der Vorwärtskopplungseinrichtung auf einen vorbestimmten Startwert;

ansprechend auf einen Zustand einer ausgewählten Speichereinrichtung, Einstellen (32) einer veränderbaren Rückkopplungseigenschaft der Rückkopplungseinrichtung (8) durch Verbinden, abhängig von einem Zustand einer Speichereinrichtung, entweder des ersten Eingangs (20b) der Auswahleinrichtung oder des zweiten Eingangs (20c) der Auswahleinrichtung mit dem Ausgang (20d) der Auswahleinrichtung;

Kombinieren (21) des Ausgangs (20d) der Auswahleinrichtung (20) mit einem Ausgang (7) der Vorwärtskopplungseinrichtung (1), um einen Wert zu erhalten;

Einspeisen des Werts in den Eingang (6) der Vorwärtskopplungseinrichtung oder in eine Recheneinrichtung, deren Ausgangswert in den Eingang (6) der Vorwärtskopplungseinrichtung eingespeist wird;

Ausgeben (34) eines Zustands einer Speichereinrichtung, die mit dem Ausgang (7) der Vorwärtskopplungseinrichtung verbunden ist, um eine Zahl der Folge von Zahlen zu erhalten;

Neubelegen (39) der Mehrzahl von Speichereinrichtungen basierend auf einem vorherigen Zustand der Speichereinrichtungen und auf einer Ausgabe der Rückkopplungseinrichtung (8); und

Wiederholen (37) der Schritte des Einstellens (32), Ausgebens (34) und Neubelegens (39), um die Folge von Zahlen zu erhalten.

**Claims**

1. A device for generating a pseudorandom sequence of numbers, comprising:

   feedforward means (1) having a plurality of memory means (2, 3, 4, 5), wherein the feedforward means (1) comprises an input (6) and an output (7) for outputting the sequence of random numbers; and

   feedback means (8) comprising a changeable feedback characteristic (9, 10) and being connected between the input (6) and the output (7) of the feedforward means (1), wherein the feedback means (8) is formed to change the feedback characteristic depending on a state of a memory means (4) of the plurality of memory means, **characterized in that** the feedback means (8) further comprises:

   selecting means (20) having a first input (20c), a second input (20c), a control input (20a) and an output (20c), wherein the selecting means (20) is formed to connect, depending on a state of a memory means, either the first input (20b) or the second input (20c) to the output (20b),

   combining means (24) for combining the output (20d) of the selecting means (20) with an output (7) of the feedforward means (1) to obtain a value which can be fed into the input (6) of the feedforward means or which can be fed into calculating means the output value of which can be fed into the input (6) of the feedforward means.

2. The device according to claim 1, wherein the feedforward means (1) is formed as a shift register, wherein the memory means (2, 3, 4, 5) are connected in series.

3. The device according to claims 1 or 2, wherein the memory means (2, 3, 4, 5) are formed as flip-flops.

4. The device according to one of the preceding claims, wherein the changeable feedback characteristic has a first feedback polynomial (9) and a second feedback polynomial (10), wherein the second feedback polynomial differs from the first feedback polynomial.

5. The device according to one of the preceding claims,
   wherein the feedforward means (1) comprises at least three memory means (3, 4, 5) connected in series,
   wherein the feedback means (8) is formed to employ a state of a second memory means (3) as the first feedback characteristic for a feedback in the case of a first state of a first (4) of the memory means, and
   wherein the feedback means (8) is formed to employ a state of a third memory means (5) as a second feedback characteristic (10) for a feedback in the case of a second state of the first memory means (4).

6.  The device according to one of the preceding claims,
    wherein the feedback means (8) is formed to use as a changeable feedback characteristic a combination of a number at the output (7) of the feedforward means (1) and a state of at least one of the plurality of memory means (2, 3, 4, 5) .

7.  The device according to claim 6,
    wherein the feedback means (8) is formed to vary a kind of the combination depending on a state of a memory means.

8.  The device according to claims 6 or 7,
    wherein the feedback means (8) is formed to select, depending on a state of a memory means (4), a memory means the state of which is combined with the number at the output (7) of the feedforward means (1).

9.  The device according to one of the preceding claims, further comprising:

    clocking means for providing a regular clock for the feedforward means (1).

10.  The device according to one of the preceding claims, wherein the plurality of memory means can be initialized to different starting states.

11.  The device according to one of the preceding claims, wherein the sequence of numbers is a sequence of bits, wherein the feedforward means (1) comprises a sequence of binary memory elements, and wherein the feedback means (8) is formed in binary logic.

12.  A method for generating a pseudorandom sequence of numbers using a feedforward means (1) having a plurality of memory means (2, 3, 4, 5), wherein the feedforward means (1) has an input (6) and an output (7), and using a feedback means (8) connected between the input (6) and the output (7) of the feedforward means (1), the feedback means (8) comprising a selecting means (20) having a first input (20b), a second input (20c), a control input (20a) and an output (20d), comprising the following steps:

    initializing (30) the memory means of the feedforward means to a predetermined starting value;
    responsive to a state of a selected memory means, setting (32) a changeable feedback characteristic of the feedback means (8), by connecting, depending on a state of a memory means, either the first input (20b) of the selecting means or the second input (20c) of the selecting means to the output (20b) of the selecting means;
    combining (21) the output (20d) of the selecting means (20) to an output (7) of the feedforward means(1), in order to obtain a value;
    feeding in the value into the input (6) of the feedforward means or into a calculating means, the output value of which is fed into the input (6) of the feedforward means;
    outputting (34) a state of a memory means connected to the output (7) of the feedforward means to obtain a number of the sequence of numbers;
    re-occupying (39) the plurality of memory means based on a previous state of the memory means and on an output of the feedback means (8); and
    repeating (37) the steps of setting (32), outputting (34) and re-occupying (39) to obtain the sequence of numbers.

**Revendications**

1.  Dispositif de génération d'une séquence pseudo-aléatoire de nombres, comportant les éléments caractéristiques suivants :

    un dispositif de couplage vers l'avant (1) comportant une pluralité de dispositifs de mémoire (2, 3, 4, 5), le dispositif de couplage vers l'avant (1) comportant une entrée (6) et une sortie (7) destinée à délivrer la séquence de nombres aléatoires ; et
    un dispositif de rétroaction (8) qui présente une propriété de rétroaction modifiable (9, 10) et qui est monté entre l'entrée (6) et la sortie (7) du dispositif de couplage vers l'avant (1), le dispositif de rétroaction (8) étant conformé de façon à modifier la propriété de rétroaction en fonction d'un état d'un dispositif de mémoire (4) de la pluralité de dispositifs de mémoire, **caractérisé en ce que** le dispositif de rétroaction (8) comporte les éléments caractéristiques suivants :

un dispositif de sélection (20) comportant une première entrée (20b), une deuxième entrée (20c), une entrée de commande (20a) et une sortie (20d), le dispositif de sélection (20) étant conformé de façon à relier, en fonction d'un état d'un dispositif de mémoire, la première entrée (20b) ou la deuxième entrée (20c) à la sortie (20d),

un dispositif combinatoire (21) destiné à combiner la sortie (20d) du dispositif de sélection (20) à la sortie (7) du dispositif de couplage vers l'avant (1) afin d'obtenir une valeur qui peut être délivrée à l'entrée (6) du dispositif de couplage vers l'avant ou à un dispositif de calcul dont la valeur de sortie peut être délivrée à l'entrée (6) du dispositif de couplage vers l'avant.

2. Dispositif selon la revendication 1, dans lequel le dispositif de couplage vers l'avant (1) est conformé en registre à décalage, les dispositifs de mémoire (2, 3, 4, 5) étant montés en série.

3. Dispositif selon la revendication 1 ou 2, dans lequel les dispositifs de mémoire (2, 3, 4, 5) sont conformés en bascules Flip-Flop.

4. Dispositif selon l'une des revendications précédentes, dans lequel la propriété de rétroaction modifiable comporte un premier polynôme de rétroaction (9) et un deuxième polynôme de rétroaction (10), le deuxième polynôme de rétroaction étant différent du premier polynôme de rétroaction.

5. Dispositif selon l'une des revendications précédentes, dans lequel
le dispositif de couplage vers l'avant (1) comporte au moins trois dispositifs de mémoire (3, 4, 5) qui sont montés en série, et
le dispositif de rétroaction (8) est conformé de façon à utiliser, dans un premier état d'un premier dispositif de mémoire (4) de la pluralité de dispositifs de mémoire, un état d'un deuxième dispositif de mémoire (3) comme première propriété de rétroaction pour effectuer une rétroaction, et
le dispositif de rétroaction (8) est conformé de façon à utiliser, dans un deuxième état du premier dispositif de mémoire (4), un état d'un troisième dispositif de mémoire (5) comme deuxième propriété de rétroaction (10) pour effectuer une rétroaction.

6. Dispositif selon l'une des revendications précédentes, dans lequel le dispositif de rétroaction (8) est conformé de façon à utiliser comme propriété de rétroaction modifiable une combinaison d'un nombre délivré à la sortie (7) du dispositif de couplage vers l'avant (1) et d'un état d'au moins un dispositif de mémoire de la pluralité de dispositifs de mémoire (2, 3, 4, 5).

7. Dispositif selon la revendication 6, dans lequel le dispositif de rétroaction (8) est conformé de façon à modifier un mode de combinaison en fonction d'un état d'un dispositif de mémoire.

8. Dispositif selon la revendication 6 ou 7, dans lequel le dispositif de rétroaction (8) est conformé de façon à sélectionner, en fonction d'un état d'un dispositif de mémoire (4), un dispositif de mémoire dont l'état est combiné au nombre délivré à la sortie (7) du dispositif de couplage vers l'avant (1) .

9. Dispositif selon l'une des revendications précédentes, qui comporte en outre l'élément caractéristique suivant :

un dispositif d'horloge destiné à délivrer une cadence régulière au dispositif de couplage vers l'avant (1).

10. Dispositif selon l'une des revendications précédentes, dans lequel la pluralité de dispositifs de mémoire peut être initialisée à des états initiaux différents.

11. Dispositif selon l'une des revendications précédentes, dans lequel
la séquence de nombres est une séquence de bits,
le dispositif de couplage vers l'avant (1) comporte une suite d'éléments de mémoire binaires, et
le dispositif de rétroaction (8) est conformé en logique binaire.

12. Procédé de génération d'une séquence pseudo-aléatoire de nombres en utilisant un dispositif de couplage vers l'avant (1) comportant une pluralité de dispositifs de mémoire (2, 3, 4, 5), le dispositif de couplage vers l'avant (1) comportant une entrée (6) et une sortie (7), et en utilisant un dispositif de rétroaction (8) qui est monté entre l'entrée (6) et la sortie (7) du dispositif de couplage vers l'avant (1), le dispositif de rétroaction (8) comportant un dispositif de sélection (20) doté d'une première entrée (20b), d'une deuxième entrée (20c), d'une entrée de commande (20a) et d'une sortie (20d), ledit procédé comportant les étapes suivantes consistant à :

initialiser (30) les dispositifs de mémoire du dispositif de couplage vers l'avant à une valeur initiale prédéterminée ;

régler (32), en réponse à un état d'un dispositif de mémoire choisi, une propriété de rétroaction modifiable du dispositif de rétroaction (8) en reliant, en fonction d'un état d'un dispositif de mémoire, la première entrée (20b) du dispositif de sélection ou la deuxième entrée (20c) du dispositif de sélection à la sortie (20d) du dispositif de sélection ;

combiner (21) la sortie (20d) du dispositif de sélection (20) à une sortie (7) du dispositif de couplage vers l'avant (1) pour une obtenir une valeur ;

délivrer la valeur à l'entrée (6) du dispositif de couplage vers l'avant ou au dispositif de calcul dont la valeur de sortie est délivrée à l'entrée (6) du dispositif de couplage vers l'avant ;

délivrer (34) un état du dispositif de mémoire qui est relié à la sortie (7) du dispositif de couplage vers l'avant pour obtenir un nombre de la séquence de nombres ;

effectuer une nouvelle occupation (39) de la pluralité de dispositifs de mémoire en se fondant sur un état précédent des dispositifs de mémoire et sur une sortie du dispositif de rétroaction (8) ; et

répéter (37) les étapes de réglage (32), de délivrance (34) et de nouvelle occupation (39) pour obtenir la séquence de nombres.

FIG 1

- Falls Inhalt von Speicherelement 4 = 0,
   dann Rückkopplungspolynom $x^8 + x^7 + 1$

- Falls Inhalt von Speicherelement 4 = 1,
   dann Rückkopplungspolynom $x^8 + x^6 + 1$

FIG 2

Initialisieren der
Speicherelemente — 30

Einstellen der veränderbaren
Rückkopplungseigenschaft — 32

34

Ausgeben einer Zahl
der Pseudozufallsfolge

Folge von
Pseudozufallszahlen

36

Mehr
Zahlen?      nein          ,38

ja                          ENDE

37

Neubelegen der
Speicherelemente — 39

**FIG 3**

... — 3 → 4 → 5 → 6 → 7 ←

UND      UND — 40b

40a

ODER      ODER

41a          41b

**FIG 4**

Initialisierung ~ 55

AUS

56

0    1    2    · · ·    n

51   52   53              54

59b                        59c

59a                59a

⊕         · · ·         ⊕

57                        58

FIG 5  (Stand der Technik)